# NEUE EUROPÄISCHE PATENTSCHRIFT

(11) **EP 0 944 893 B2**
(45) Veröffentlichungstag und Bekanntmachung des Hinweises auf die Entscheidung über den Einspruch: **14.06.2006**
(45) Hinweis auf die Patenterteilung: 23.05.2001
(21) Anmeldenummer: 97953603.4
(22) Anmeldetag: 27.11.1997
(51) Int. Cl.: G08G 1/0968

(54) **VERFAHREN ZUM SELEKTIEREN VON, EINE ROUTE EINES FAHRZEUGES MIT EINEM ENDGERÄT IN EINEM VERKEHRSNETZ BETREFFENDEN UND VON EINER ZENTRALE AUSGESENDETEN, VERKEHRSINFORMATIONEN**
PROCESS FOR SELECTING THE TRAFFIC INFORMATION TRANSMITTED BY A TRAFFIC INFORMATION CENTRE WHICH CONCERNS A ROUTE OF A VEHICLE EQUIPPED WITH A TERMINAL IN A ROAD NETWORK
PROCEDE DE SELECTION D'INFORMATIONS SUR LA CIRCULATION TRANSMISES PAR UN CENTRAL ET CONCERNANT UN TRAJET D'UN VEHICULE EQUIPE D'UN TERMINAL DANS UN RESEAU ROUTIER

(30) Priorität: 16.12.1996 DE 1965369; 10.11.1997 DE 1975077
(43) Veröffentlichungstag der Anmeldung: 29.09.1999
(73) Patentinhaber: ATX Europe GmbH, 40549 Düsseldorf (DE)
(72) Erfinder: MEIS, Josef, D-48147 Münster (DE); PARRA, Andreas, D-22391 Hamburg (DE); STANGIER, Peter, D-50389 Wesseling (DE)
(74) Vertreter: Meissner, Peter E.
(86) Internationale Anmeldenummer: PCT/DE1997/002815
(87) Internationale Veröffentlichungsnummer: WO 1998/027527

(56) Entgegenhaltungen:
- EP-A- 0 261 450
- EP-A- 0 670 565
- EP-A- 0 715 289
- DE-A- 19 524 949
- DE-C- 4 445 582
- US-A- 4 796 189
- PATENT ABSTRACTS OF JAPAN vol. 095, no. 010, 30.November 1995 & JP 07 167665 A (NIPPONDENSO CO LTD), 4.Juli 1995,

## Beschreibung

Die Erfindung betrifft ein Verfahren zum Selektieren von eine Route eines Fahrzeuges mit einem Endgerät in einem Verkehrsnetz betreffenden, von einer Zentrale ausgesendeten Verkehrsinformationen sowie ein Endgerät und eine Zentrale zum Durchführen des Verfahrens.

Für ein Fahrzeug mit einem Endgerät kann eine Route durch das Verkehrsnetz von einem gewünschten Anfangsort zu einem gewünschten Zielort in einer Verkehrszentrale aufgrund von Entfernungen, aktuellen Verkehrsinformationen, wie Staus etc., bestimmt und an das Endgerät übermittelt werden. Auch ist im Endgerät eine Bestimmung einer Route zwischen einem gewünschten Anfangspunkt und einem Endpunkt im Verkehrsnetz möglich. Insbesondere für die Entscheidung über die Aktualisierung einer Route sind Verkehrsinformationen zu einem vom aktuellen Ort weit entfernten Ort von untergeordneter Bedeutung. Wenn im Endgerät eine vollständige Karte des durchfahrenen Verkehrsnetzes vorliegt, ist eine Zuordnung von im Endgerät empfangenen, von der Verkehrszentrale ausgesendeten Verkehrsinformationen zu bestimmten Straßen oder Städten ect. möglich. Beim Fehlen einer vollständigen digitalen Karte des durchfahrenen Verkehrsnetzes ist eine Identifizierung von durch Verkehrsinformationen betroffenen Straßen im Endgerät zur Refevänzprüfung für die aktuelle Route nicht möglich.

Die DE 44 45 582 offenbart ein Verfahren zum Selektieren von für ein Fahrzeug in einem Verkehrsnetz relevanten, von einer Zentrale gesendeten Verkehrsinformationen, wobei zum Selektieren ein z.B. ellipsenförmiger Bereich um den Ort des Fahrzeuges mit Ausrichtung der Längsachse der Ellipse in Fahrtrichtung gelegt wird.

Aufgabe der vorliegenden Erfindung ist das Ermöglichen einer möglichst einfachen und effizienten Relevanzprüfung von Verkehrsinformationen unter Berücksichtigung einer vom Fahrzeug mit einem Endgerät durchfahrenen Route durch das

Verkehrsnetz. Die Aufgabe wird jeweils durch die Gegenstände der unabhängigen Ansprüche gelöst.

Das erfindungsgemäße Verfahren zum Selektieren von eine Route eines Fahrzeuges mit einem Endgerät in einem Verkehrsnetz betreffenden, von einer Zentrale ausgesendeten Vekehrsinformationen (wie Stauinformationen, Verkehrsdichte, Reisezeiten) ermöglicht auch bei fehlender digitaler Karte des Verkehrsnetzes bzw. bei Unvollständigkeit der digitalen Karte eine einfache, effiziente und fehlerunanfällige Zuordnung von empfangenen Vekehrsinformationen einschließlich einer Relevanzprüfung hinsichtlich der durchfahrenen Route. Die Definition einer Zone, also eines Korridors, zwischen jeweils zwei Wegpunkten einer durch Wegpunkte definierten Route ermöglicht eine entlang der Route durchgehend gute Selektion von Verkehrsinformationen. Selektierte Verkehrsinformationen können insbesondere dem Benutzer des Endgerätes optisch und/oder akustisch mitgeteilt werden, womit der Benutzer von unbedeutenden Verkehrsinformationen verschont wird. Ferner können als bedeutsam für die Route selektierte Verkehrsinformationen zur Beurteilung des Erfordernisses einer Routenneuberechnung verwendet werden, was wesentlich günstiger hinsichtlich Telekommunikationskosten ist als laufende interaktive Kommunikation zwischen dem Endgerät und der Verkehrszentrale zur Frage der Routenneuberechnung. Eine Routenneuberechnung kann in einer Verkehrszentrale erfolgen, was den Vorteil hat, daß dort aktuelle Verkehrsinformationen optimal mit großem Rechenaufwand lokal zugeordnet und mit einbezogen werden und daß lediglich in der Verkehrszentrale eine sehr detaillierte Karte des Verkehrsnetzes erforderlich ist. Eine Routenneuberechnung kann auch im Endgerät erfolgen, was eine größere Autarkie ermöglicht.

Zweckmäßig wird zwischen je zwei aufeinanderfolgenden Wegpunkten der gesamten Route je eine Zone definiert.

Die Definition Korridoren, erfolgt zweckmäßig im Endgerät aufgrund der mit ihren geographischen Positionen (insbesondere geographische Länge und Breite mit vorgegebener Rundung) übermittelten Wegpunkte der vorgeschlagenen Route.

Dabei wird die Zone zwischen zwei Wegpunkten als Korridor zwischen zwei zu einer Geraden zwischen je zwei Wegpunkten parallelen Geraden mit vorgegebenem oder vorgebbarem Abstand zur Geraden definiert. Eine derartige Zone ist insbesondere im Endgerät leicht berechenbar und ermöglicht eine einfache Überprüfung, ob übermittelte Verkehrsinformationen in dieser Zone liegen. Somit ergibt sich zwischen zwei Wegpunkten ein etwa rechteckiger Teilkorridor.

Nach einer Ausgestaltung der Erfindung wird dabei der Abstand der beiden Parallelen zur Verbindungslinie zwischen je zwei Wegpunkten unverändert beibehalten. Dies ermöglicht eine einfache Berechnung. Ferner ist es möglich, den Abstand mit zunehmender Entfernung vom aktuellen Ort zu vergrößern, um zu berücksichtigen, daß in größerer Entfernung Verkehrsinformationen zu von der Route weiter entfernten Orten bedeutend werden können, bis sich das Fahrzeug dorthin fortbewegt hat, weil sich während der Reisezeit dorthin Staus etc. bis zur Route hin fortpflanzen können.

Die Übertragung von Verkehrsinformationen, wie Staumeldungen, Durchschnittsgeschwindigkeiten, Reisezeiten, Unfällen etc., von der Verkehrszentrale an das Endgerät erfolgt zweckmäßig mit einer Bezeichnung der von der Verkehrsinformation betroffenen Stra-ße, Straßen, Straßenabschnitte, Städte etc. Alternativ oder zusätzlich ist eine Ortsangabe zu Verkehrsinformationen vorteilhaft, welche insbesondere als geographische Länge und Breite des von der Verkehrsinformation betreffenden Ortes bzw. der Orte erfolgen kann.

Die Übertragung von Verkehrsinformationen und/oder Routendaten und/oder einer Anfrage vom Endgerät an die Verkehrszentrale zu einer neuen Routenberechnung erfolgt zweckmäßig per Funk, insbesondere Mobilfunk.

Die Wegpunkte einer Route definierende Routeninformationen werden bei einer Routenberechnung in der Zentrale zweckmäßig von der Zentrale an das Endgerät per Funk, insbesondere Mobilfunk übermittelt. Verkehrsinformationen zur Verkehrssituation können per Radio übermittelt werden; sie können insbesondere auch per Mobilfunk, insbesondere als Mobilfunkkurznachricht (GSM-SMS) übermittelt werden; Verkehrsinformationen können insbesondere auch lokal begrenzt ausgestrahlt werden, beispielsweise in lokal definierten GSM-SMS-Seiten.

Weitere Merkmale und Vorteile der Erfindung ergeben sich aus der Beschreibung eines Ausführungsbeispiels anhand der Zeichnung. Dabei zeigt:
- Fig. 1: ein Beispiel einer als nicht relevant für die Route eines Fahrzeuges selektierten Verkehrsinformation und
- Fig. 2: ein Beispiel einer als relevant selektierten Verkehrsinformation.

Ein Benutzer eines Endgerätes in einem Fahrzeug gibt den Anfangspunkt und Zielpunkt seiner Fahrt in das Endgerät ein. Das Endgerät übermittelt Anfangspunkt und Endpunkt an eine nicht dargestellte Verkehrszentrale. Die Verkehrszentrale bestimmt für den Anfangspunkt und Zielpunkt (= Endpunkt) eine Route für das Fahrzeug durch das Verkehrsnetz, wobei insbesondere Verkehrsinformationen in der Verkehrszentrale zu Staus, Unfallschwerpunkten, Umleitungen, Reisegeschwindigkeiten, Verkehrsdichte etc. berücksichtigt werden. Die berechnete Route wird von der Verkehrszentrale an das Fahrzeug durch Routeninformationen übermittelt, welche Wegpunkte längs der Route definieren. Wegpunkte können insbesondere dort definiert werden, wo eine Straße längs der Route ihren Namen ändert aufgrund einer Abzweigung, Straßenumbenennung etc., was insbesondere für ein Endgerät ohne digitale Karte des Verkehrsnetzes vorteilhaft ist. Eine Route ergibt sich also als Kette von Wegpunkten zwischen dem Anfangspunkt und dem Zielpunkt der gewünschten Reise durch das Verkehrsnetz. Zu die Wegpunkte der Route definierenden Routeninformatiönen können insbesondere der Straßenname der zwischen zwei Wegpunkten zu durchfahrenden Straße von der Zentrale an das Endgerät übermittelt werden. Alternativ oder zusätzlich können geographische Informationen zu jeweils einem Wegpunkt, insbesondere dessen mit vorgegebener Länge gerundete geographische Länge und Breite übermittelt werden. Während der Fahrt längs der Route erhält ein Fahrer Verkehrsinformationen per Radio und/oder Mobilfunk von der Verkehrszentrale, insbesondere zu Staus etc. Diese können dem Fahrer angezeigt werden und/oder als Grundlage einer Entscheidung über eine Neuberechnung einer Route aufgrund von Stau etc. verwendet werden. Damit ein Fahrer nicht unnötig mit Verkehrsinformationen belästigt wird, die für ihn aufgrund seiner Route mit Sicherheit irrelevant sind, werden die von der Zentrale gesendeten Verkehrsinformationen im Endgerät selektiert.

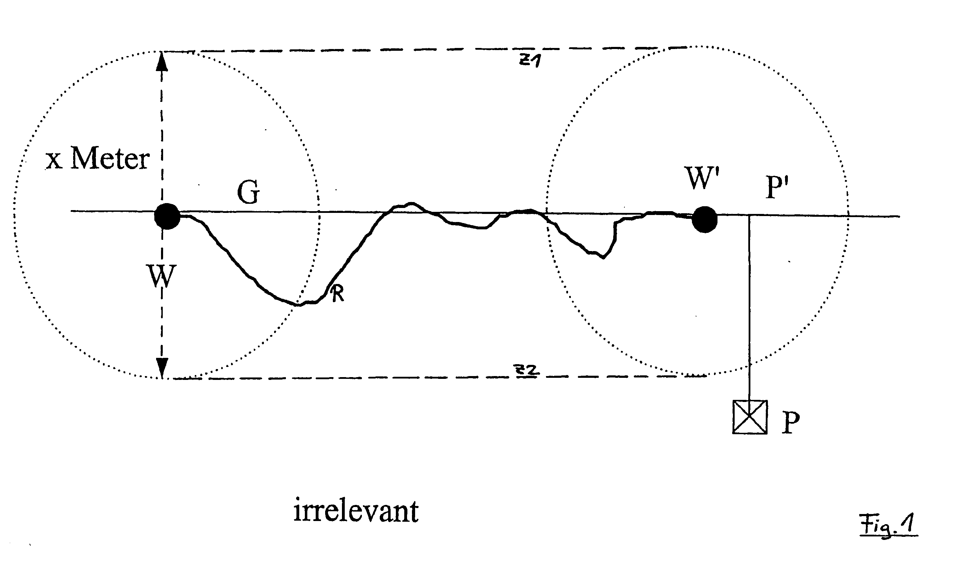

Figur 1 zeigt zwei Wegpunkte W und W', welche ein Teilstück der Route des Fahrzeuges durch das Verkehrsnetz definieren. Zwischen diesen beiden Wegpunkten W und W' wird eine Gerade G gezogen. Verkehrsinformationen, welche einen Punkt P betreffen, welcher eine über einem vorgegebenen oder vorgebbaren Grenzwert liegende Entfernung zur Geraden G hat, werden als nicht relevant selektiert; Verkehrsinformationen zu einem Ort P, welcher einen Abstand von der Geraden G unterhalb eines vorgegebenen Grenzwertes hat, werden als relevant selektiert, worauf sie beispielsweise dem Benutzer angezeigt werden oder Grundlage für eine Entscheidung über eine Routenneuberechnung bilden können.

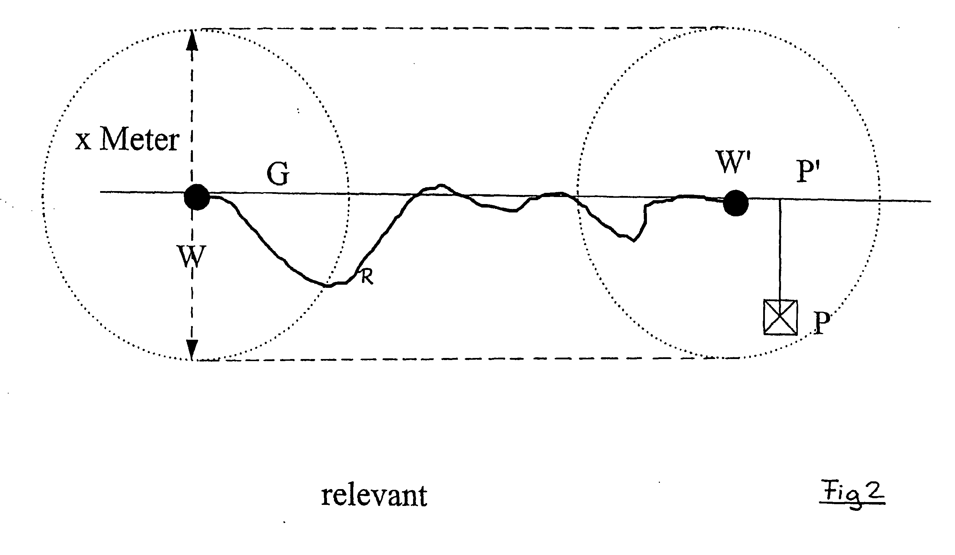

In Figur 1 ist eine Verkehrsinformation (zu einem Ort P) dargestellt, welche einen über einem Grenzwert x/2 Meter liegenden Abstand von der Geraden G haben, weshalb die Verkehrsinformation zum Punkt P als nicht relevant selektiert werden. Im Beispiel in Figur 2 betreffen die Verkehrsinformationen einen Ort P, welcher einen unterhalb des Grenzwertes liegenden Abstand zur Geraden G, also einen Abstand unterhalb von x/2 Meter aufweist, weshalb die Verkehrsinformationen als relevant selektiert werden.

Die Bestimmung des Abstands des Punktes P von der Geraden G kann insbesondere aufgrund geographischer Koordinaten von W, W', P erfolgen.

Da im in Figur 1 und 2 gezeigten Beispiel das Kriterium für die Entscheidung über die Relevanz von Verkehrsinformationen für die Route der Abstand von einer Geraden zwischen zwei Wegpunkten W und W' ist, ist die Zone, in welcher Verkehrsinformationen relevant sind, hier etwa ein Rechteck, welches durch zwei parallele Z1 und Z2 zur Geraden G zwischen den zwei Wegpunkten W, W' (und durch Orthogonale zu G durch die Wegpunkte W, W') definiert wird. Da sich in Figur 1, 2 links und rechts von W und W' weitere Wegpunkte zur vorgeschlagenen Route befinden, ergibt sich insgesamt für die Route ein Korridor längs der vorgeschlagenen Route als Zone, innerhalb welcher Verkehrsinformationen relevant sind.

Zwischen den Wegpunkten W und W' verläuft die vorgeschlagene Route entlang der Linie R in Figur 1 und Figur 2; die Krümmung der Teilroute R ist durch Kurven einer Straße etc. bedingt.

Die Erfindung ist in einem Endgerät und/oder einer Zentrale insbesondere als Programm implementierbar. Im Endgerät sind dabei insbesondere Programmteile zur Selektion von Verkehrsinformationen, welche eine Zone zwischen zwei Wegpunkten betreffen, zu implementieren. Ebenso ist eine Ausgestaltung als elektronische Schaltung möglich.

## Patentansprüche

1. Verfahren zum Selektieren von für eine Route eines ein Endgerät aufweisenden Fahrzeuges in einem Verkehrsnetz relevanten, von einer Zentrale gesendeten Verkehrsinformationen,
wobei die Route in Form von Wegpunkten zwischen einem Anfangspunkt und einem Zielpunkt im Verkehrsnetz bestimmt wird,
wobei zum Selektieren von relevanten Verkehrsinformationen jeweils zwischen zwei Wegpunkten eine Zone definiert wird, wobei einen Ort in der Zone betreffende Verkehrsinformationen als relevant selektiert werden, während einen Ort außerhalb der Zone betreffende Verkehrsinformationen als nicht relevant definiert werden, wobei die Zone als Korridor zwischen zwei Parallelen zu einer Geraden zwischen zwei Wegpunkten, mit vorgegebenem odervorgebbarem Abstand zur Geraden definiert wird.

2. Verfahren nach Anspruch 1,
**dadurch gekennzeichnet,**
**daß** nur als relevant selektierte Verkehrsinformation dem Benutzer eines Endgerätes optisch oder akustisch mitgeteilt werden.

3. Verfahren nach einem der vorhergehenden Ansprüche,
**dadurch gekennzeichnet,**
**daß** nur als relevant selektierte Verkehrsinformationen zur Beurteilung des Erfordernisses einer Routenneuberechnung verwendet werden.

4. Verfahren nach einem dervorhergehenden Ansprüche,
**dadurch gekennzeichnet,**
**daß** eine Routenberechnung in einer Verkehrszentrale erfolgt.

5. Verfahren nach einem dervorhergehenden Ansprüche,
**dadurch gekennzeichnet,**
**daß** zwischen je zwei aufeinanderfolgenden Wegpunkten der gesamten Route je eine Zone definiert wird.

6. Verfahren nach einem der vorhergehenden Ansprüche,
**dadurch gekennzeichnet, dass** die Zone im Endgerät definiert wird.

7. Verfahren nach Anspruch 6,
**dadurch gekennzeichnet,**
**daß** längs der Route die Zone eine konstante Breite aufweist.

8. Verfahren nach einem der vorhergehenden Ansprüche,
**dadurch gekennzeichnet,**
**daß** die Übertragung von Verkehrsinformationen mit einer Straßenbezeichnung von durch die Verkehrsinformation betroffenen Straßen oder Straßenabschnitten erfolgt.

9. Verfahren nach einem der vorhergehenden Ansprüche,
**dadurch gekennzeichnet,**
**daß** die Übertragung von Verkehrsinformationen mit einer geographischen Ortsangabe des von den Verkehrsinformationen betroffenen Ortes oder Gebietes erfolgt.

10. Verfahren nach einem der vorhergehenden Ansprüche,
**dadurch gekennzeichnet,**
**daß** die Wegpunkte definierende Routen-Informationen von der Verkehrszentrale an das Endgerät per Funk, insbesondere per Mobilfunk, übermittelt werden.

11. Verfahren nach einem dervorhergehenden Ansprüche,
**dadurch gekennzeichnet,**
**daß** die Verkehrssituation betreffende Verkehrsinformationen per Funk, insbesondere per Mobilfunk, insbesondere per GSM-SMS, übermittelt werden.

12. Verfahren nach einem der vorhergehenden Ansprüche,
**dadurch gekennzeichnet,**
**daß** die Verkehrssituation betreffende Verkehrsinformationen als Radiosendung, insbesondere digitale Radiosendung, übermittelt werden.

13. Verfahren nach einem der vorhergehenden Ansprüche;
**dadurch gekennzeichnet,**
**daß** Wegpunkte dort definiert werden, wo sich entlang der Route Straßenbezeichnungen ändern.

14. Endgerät mit einer Selektionseinrichtung zum Selektieren von für eine Route eines das Endgerät aufweisenden Fahrzeuges in einem Verkehrsnetz relevanten, von einer Zentrale gesendeten Verkehrsinformationen, wobei die Selektionseinrichtung so ausgebildet ist, daß die Route in Form von Wegpunkten zwischen einem Anfangspunkt und einem Zielpunkt im Verkehrsnetz bestimmt wird,
wobei zum Selektieren von relevanten Verkehrsinformationen jeweils zwischen zwei Wegpunkten eine Zone definiert wird, wobei einen Ort in der Zone betreffende Verkehrsinformationen als relevant selektiert werden, während einen Ort außerhalb der Zone betreffende Verkehrsinformationen als nicht relevant definiert werden mit einer Kommunikationseinrichtung zum Empfangen von Verkehrsinformationen und/oder Routeninformationen von einer Verkehrszentrale und
mit einer optischen und/oder akustischen Benutzerschniftstelle zum Informieren eines Benutzers des Endgerätes, wobei die Zone als Korridor zwischen zwei Parallelen zu einer Geraden zwischen zwei Wegpunkten, mit vorgegebenem odervorgebbarem Abstand zur Geraden definiert wird.

## Claims

1. A method for selecting traffic information, transmitted by a central exchange, relevant to the route of a vehicle equipped with a terminal in a road network,
wherein the route is determined in the form of route points between a starting point and a destination point in the road network,
wherein, to select relevant traffic information, a zone is defined in each case between two route points,
wherein traffic information concerning a location in the zone is selected as relevant, while traffic information concerning a location outside the zone is defined as not relevant, wherein the zone is defined as a corridor between two lines parallel to a straight line between two route points, at a predetermined or predeterminable distance from the straight line.

2. A method according to claim 1,
**characterised in that**
only traffic information selected as relevant is communicated visually or audibly to the user of a terminal.

3. A method according to one of the preceding claims,
**characterised in that**
only traffic information selected as relevant is used to assess the need for route recalculation.

4. A method according to one of the preceding claims,
**characterised in that**
route calculation is performed in a central traffic management exchange.

5. A method according to one of the preceding claims,
**characterised in that**
a zone is defined between every two successive route points throughout the route.

6. A method according to one of the preceding claims, **characterised in that** the zone is defined in the terminal.

7. A method according to claim 6,
**characterised in that**
the zone exhibits a constant width along the length of the route.

8. A method according to one of the preceding claims,
**characterised in that**
traffic information is transmitted with the road names of the roads or road sections to which the traffic information relates.

9. A method according to one of the preceding claims,
**characterised in that**
traffic information is transmitted with an indication of the geographic location of the place or area to which the traffic information relates.

10. A method according to one of the preceding claims,
**characterised in that**
the route information defining route points is transmitted by the central traffic management exchange to the terminal by radio, in particular by cellular radio.

11. A method according to one of the preceding claims,
**characterised in that**
traffic information relating to the traffic situation is transmitted by radio, in particular by cellular radio, in particular by GSM/SMS.

12. A method according to one of the preceding claims,
**characterised in that**
traffic information relating to the traffic situation is transmitted as a radio broadcast, in particular a digital radio broadcast.

13. A method according to one of the preceding claims,
**characterised in that**
route points are defined where road names change along the route.

14. A terminal with a selection means for selecting traffic information, transmitted by a central exchange, relevant to the route of a vehicle equipped with the terminal in a road network, wherein the selection means is so designed that the route is determined in the form of route points between a starting point and a destination point in the road network,
wherein, to select relevant traffic information, a zone is defined in each case between two route points,
wherein traffic information concerning a location in the zone is selected as relevant, while traffic information concerning a location outside the zone is defined as not relevant,
having a communication means for receiving traffic information and/or route information from a central traffic management exchange and
having a visual and/or audible user interface for informing a user of the terminal,
wherein the zone is defined as a corridor between two lines parallel to a straight line between two route points, at a predetermined or predeterminable distance from the straight line.

## Revendications

1. Procédé pour sélectionner des informations de trafic, émises par une centrale, pertinentes pour un itinéraire d'un véhicule, présentant un terminal, dans un réseau routier, l'itinéraire étant déterminé sous forme de points de trajet entre un point de départ et un point de destination dans le réseau routier, une zone étant définie, à chaque fois, entre deux points de trajet pour sélectionner des informations de trafic pertinentes, des informations de trafic concernant un lieu dans la zone étant sélectionnées comme pertinentes, tandis que des informations de trafic concernant un lieu à l'extérieur de la zone sont définies comme non pertinentes, la zone étant définie comme un corridor entre deux parallèles à une droite reliant deux points de trajet, avec un écartement, par rapport à la droite, prédéfini ou pouvant être prédéfini.

2. Procédé selon la revendication 1,
**caractérisé en ce qu'**uniquement des informations de trafic sélectionnées comme pertinentes sont communiquées à l'utilisateur d'un terminal de façon optique ou acoustique.

3. Procédé selon une des revendications précédentes,
**caractérisé en ce qu'**uniquement des informations de trafic sélectionnées comme pertinentes sont utilisées pour juger de l'exigence d'un nouveau calcul d'itinéraire.

4. Procédé selon une des revendications précédentes,
**caractérisé en ce qu'**un calcul d'itinéraire est effectué dans une centrale de trafic.

5. Procédé selon une des revendications précédentes,
**caractérisé en ce que**, à chaque fois, une zone est définie entre, à chaque fois, deux points de trajet successifs de l'itinéraire dans son ensemble.

6. Procédé selon une des revendications précédentes,
**caractérisé en ce que** la zone est définie dans le terminal.

7. Procédé selon la revendication 6,
**caractérisé en ce que**, le long de l'itinéraire, la zone présente une largeur constante.

8. Procédé selon une des revendications précédentes,
**caractérisé en ce que** la transmission d'informations de trafic est effectuée avec une indication de routes ou de tronçons de routes concernés par les informations de trafic.

9. Procédé selon une des revendications précédentes,
**caractérisé en ce que** la transmission d'informations de trafic est effectuée avec une information géographique de la région ou du lieu concerné par les informations de trafic.

10. Procédé selon une des revendications précédentes,
**caractérisé en ce que** des informations d'itinéraire définissant les points de trajet sont transmises de la centrale de trafic au terminal par radio, en particulier par radiotéléphonie mobile.

11. Procédé selon une des revendications précédentes,
**caractérisé en ce que** des informations de trafic concernant la situation de trafic sont transmises par radio, en particulier par radiotéléphonie mobile, en particulier par GSM-SMS.

12. Procédé selon une des revendications précédentes,
**caractérisé en ce que** des informations de trafic concernant la situation de trafic sont transmises comme émission radio, en particulier émission radio numérique.

13. Procédé selon une des revendications précédentes,
**caractérisé en ce que** des points de trajet sont définis là où, le long de l'itinéraire, des indications routières sont modifiées.

14. Terminal, comportant un dispositif de sélection pour sélectionner des informations de trafic émises par une centrale, pertinentes pour un itinéraire d'un véhicule présentant le terminal dans un réseau routier, le dispositif de sélection étant réalisé de sorte que l'itinéraire est déterminé sous forme de points de trajet entre un point de départ et un point de destination dans le réseau routier, une zone étant définie, à chaque fois, entre deux points de trajet pour sélectionner des informations de trafic pertinentes, des informations de trafic concernant un lieu dans la zone étant sélectionnées comme pertinentes, tandis que des informations de trafic concernant un lieu à l'extérieur de la zone étant définies comme non pertinentes, un dispositif de communication pour recevoir des informations de trafic et/ou des informations d'itinéraire d'une centrale de trafic, et une interface d'utilisateur optique et/ou acoustique pour informer un utilisateur du terminal, la zone étant définie comme un corridor entre deux parallèles à une droite reliant deux points de trajet, avec un écartement, par rapport à la droite, prédéfini ou pouvant être prédéfini.
